# EUROPEAN PATENT SPECIFICATION

(11) **EP 1 986 462 B1**
(45) Date of publication and mention of the grant of the patent: **09.02.2011**
(21) Application number: 07720471.7
(22) Date of filing: 20.03.2007
(51) Int. Cl.: H04W 36/18

(54) **METHOD AND APPARATUS FOR SOFT HANDOVER IN COMMUNICATION SYSTEM**
VERFAHREN UND VORRICHTUNG FÜR WEICHE WEITERLEITUNGEN IN EINEM KOMMUNIKATIONSSYSTEM
PROCEDE ET APPAREIL POUR UN TRANSFERT INTERCELLULAIRE SANS COUPURE DANS UN SYSTEME DE COMMUNICATION

(30) Priority: 09.06.2006 CN 200610092916
(43) Date of publication of application: 29.10.2008
(73) Proprietor: Huawei Technologies Co., Ltd., Longgang District, Shenzhen Guangdong 518129 (CN)
(72) Inventor: GONG, Xiaodong, Guangdong 518129 (CN)
(74) Representative: Pfenning, Meinig & Partner GbR
(86) International application number: PCT/CN2007/000897
(87) International publication number: WO 2007/140682

(56) References cited:
- WO-A1-2006/018715
- CN-A- 1 658 688
- CN-A- 1 761 358
- US-A1- 2005 053 035
- US-A1- 2006 039 326
- "Universal Mobile Telecommunications System (UMTS); UTRAN functions, examples on signalling procedures (3GPP TR 25.931 version 7.1.0 Release 7); ETSI TR 125 931" ETSI STANDARDS, LIS, SOPHIA ANTIPOLIS CEDEX, FRANCE, vol. 3-R3, no. V7.1.0, 1 June 2006 (2006-06-01), XP014034130 ISSN: 0000-0001
- "Universal Mobile Telecommunications System (UMTS); UTRAN Iub interface Node B Application Part (NBAP) signalling (3GPP TS 25.433 version 7.1.0 Release 7); ETSI TS 125 433" ETSI STANDARDS, LIS, SOPHIA ANTIPOLIS CEDEX, FRANCE, vol. 3-R3, no. V7.1.0, 1 June 2006 (2006-06-01), XP014035613 ISSN: 0000-0001

## Description

### Field of the Invention

This invention relates to the communication field, in particular, to a method and apparatus for soft handoff in a communication system.

### Background of the Invention

Wideband code division multiple access (WCDMA) is a widely used third-generation mobile communication technology. A WCDMA system mainly includes a core network (CN), universal terrestrial radio access network (UTRAN) and user equipments (UE). The UE exchanges data with network equipment over an air interface and provides users with various circuit switched (CS) and packet switched (PS) service functions, including common voice, data communications, and mobile multimedia and Internet applications. The UTRAN is usually used to achieve functions such as access control, mobility management, and radio resource management and control of the system. It may include one or more than one radio network subsystems (RNS) connected to the CN over an lu interface or lu interfaces. An RNS may include a radio network controller (RNC) and one or more than one Node Bs. The Node B interconnects with an RNC over a standard lub interface and implements processing of the physical layer protocol over the air interface. The RNC implements connection establishment, disconnection, handoff, macro diversity combination, and radio resource management and control. The CN connects to other networks and manages +communications with the UE.

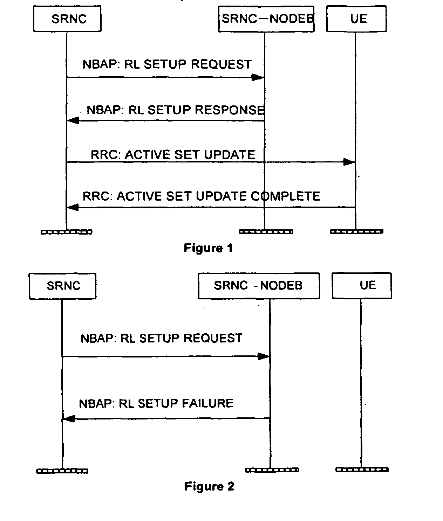

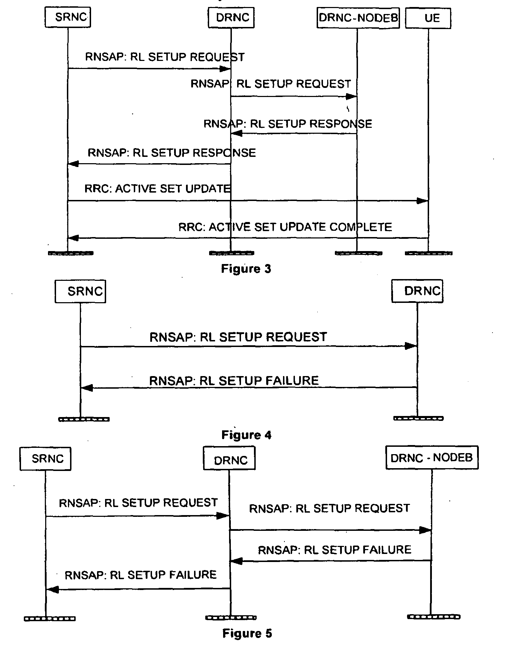

When a user crosses a cell during conversation or data downloading, soft handoff is required. Soft handoff is a feature of the third-generation mobile communication system. It refers to the handoff in which the UE communicates with another Node B on the same carrier, or the handoff in which the UE communicates with different sectors of a same Node B at the same time (softer handoff), which is used in the CDMA system where neighboring cells have the same carrier allocated. To avoid loss of data during soft handoff, when performing soft handoff, the UE adds a radio link (RL) in advance to the new cell it accesses, and then disconnects the RL of the previous cell. Figure 1 and Figure 2 show signaling flow charts of two different processing modes for adding a macro diversity RL to the same RNS in the prior art, and Figure 3, Figure 4 and Figure 5 show signaling flow charts of three different processing modes for adding a macro diversity RL to different RNSs in the prior art.

In R5 and later versions of the WCDMA 3GPP Standards, high speed downlink packet access (HSDPA) is introduced, and a dedicated channel (DCH) is no longer used for HSDPA downlink services. To be compatible with previous R99 and R4, the WCDMA 3GPP protocol introduces a new information element (IE), that is, unidirectional DCH indicator, as described in the Node B Application Part protocol shown in Table 1. The unidirectional DCH indicator is added in previously existed DCH IEs in related messages of the NBAP and the Radio Network Subsystem Application Part (RNSAP) to indicate the valid direction of DCH. See the DCH IEs of the NBAP protocol in Table 2.

**Table 1 Unidirectional DCH indicator of NBAP**

| **IE/Group Name** | **Presence** | **Range** | **IE Type and Reference** | **Semantics Description** |
|---|---|---|---|---|
| Unidirectional DCH Indicator | | | ENUMERATED (Downlink DCH only, Uplink DCH only) | "Downlink DCH only" shall only be used by TDD. |

**Table 2 DCH IEs of NBAP**

| **IE/Group Name** | **Presence** | **Range** | **IE Type and Reference** | **Semantics Description** | **Criticality** | **Assigned Criticality** |
|---|---|---|---|---|---|---|
| DCH FDD Information | | 1..<maxnoof DCHS> | | | - | |
| >Payload CRC Presence Indicator | **M** | | 9.2.1.49 | | - | |
| >UL FP Mode | **M** | | 9.2.1.66 | | - | |
| >ToAWS | **M** | | 9.2.1.61 | | - | |
| >ToAWE | **M** | | 9.2.1.60 | | - | |
| >DCH Specific Info | | 1..<maxnoof DCHs> | | | - | |
| >>DCH ID | **M** | | 9.2.1.20 | | - | |
| >>Transport Format Set | **M** | | 9.2.1.59 | For UL | - | |
| >>Transport Format Set | **M** | | 9.2.1.59 | For DL | - | |
| >>Allocation/Retention Priority | **M** | | 9.2.1.1A | | - | |
| >>Frame Handling | **M** | | 9.2.1.30 | | - | |

| Priority | | | | | | |
|---|---|---|---|---|---|---|
| >>QE-Selector | M | | 9.2.1.50A | | - | |
| >>Unidirectional DCH Indicator | O | | 9.2.1.68 | | YES | reject |
| >TNL QoS | O | | 9.2.1.58A | | YES | ignore |

In Figure 1, when adding an RL in case a signaling connection and the HSDPA service is established between the serving radio network controller (SRNC) and the UE over the standard version of R5 or later versions, if the standard version the SRNC-Node B which adds the RL follows is earlier than R5, for example, R99 or R4, the SRNC-Node B ignores the RL SETUP REQUEST because it is unable to understand the unidirectional DCH indicator when receiving the RL SETUP REQUEST from the NBAP of the SRNC. As a results, it wrongly considers the DCH of the HSDPA service to be bidirectional. Thus, the configured transport format combination set (TFCS) on the SRNC-Node B differs from the TFCS used by the UE. Consequently, the packets transmitted by the SRNC on the macro diversity tributary are incorrect, which affects combination and reception of downlink packets performed by the UE and even results in a call drop.

Or, when the standard version the SRNC-Node B which adds the RL follows is earlier than R5, the SRNC may delete the IE in the DCH indicator carried in the RL SETUP REQUEST in advance. In this case, when receiving the RL SETUP REQUEST from the SRNC, the SRNC-Node B wrongly considers the DCH to be bidirectional in processing because it is unable to obtain the DCH indicator in the RL SETUP REQUEST. Therefore, the configured TFCS on the SRNC-Node B also differs from the TFCS used by the UE. As a result, the packets transmitted by the SRNC on the macro diversity tributary are incorrect, which affects combination and reception of downlink packets performed by the UE and even causes a call drop.

In addition, in Figure 2, as specified in the WCDMA 3GPP standard, the SRNC-Node B considers the RL SETUP REQUEST to be invalid because it is unable to understand the unidirectional DCH indicator in the request when receiving the RL SETUP REQUEST from the SRNC, it returns an RL SETUP FAILURE message to the SRNC. In this case, the SRNC may terminate the subsequent process, which makes the UE unable to perform soft handoff. As a result, the signals received by the UE may deteriorate gradually, and eventually a call drop occurs.

The soft handoff process shown in Figure 3 to Figure 5 has a similar problem that occurs in Figure 1 and Figure 2, which may be caused by the following reasons. The SRNC and the UE establish signaling connections and enable the HSDPA service over R5 or later versions, whereas the drift radio network controller (DRNC) adopts R99 or R4. The SRNC and the UE establish signaling connections and enable the HSDPA service over R5 or later versions, whereas the DRNC-Node B adopts R99 or R4. In the first case, the unidirectional DCH indicator in the RL SETUP REQUEST sent by the RNSAP of the SRNC over the lur interface cannot be identified by the DRNC. Consequently, the DRNC takes the DCH as a bidirectional DCH, and the DRNC-Node B processes the DCH as a bidirectional one; or the DRNC returns an RL SETUP FAILURE message to the SRNC to terminate soft handoff. In the second case, although the DRNC can correctly identify the unidirectional DCH indicator in the RL SETUP REQUEST sent by the RNSAP of the SRNC over the lur interface, the unidirectional DCH indicator in the RL SETUP REQUEST sent by the NBAP of the DRNC over the lub interface cannot be identified by the DRNC-Node B, and consequently, the DRNC-Node B processes the DCH as a bidirectional one; or the DRNC-Node B returns an RL SETUP FAILURE message to the SRNC via the DRNC to terminate soft handoff.

It is obvious that the DRNC or Node B using the standard of an earlier version cannot process the messages sent by the SRNC and/or the DRNC using the protocol of a later version during soft handover in a WCDMA system. Thus, the SRNC-Node B, DRNC or DRNC-Node B using the protocol of an earlier version cannot identify the unidirectional DCH indicator in the messages sent by the SRNC and/or DRNC using the standard of a later version therefore the TFCS used by the Node B being different from that used by the UE. As a result, a new RL may interfere with the original RL, or soft handover fails because the Node B considers the RL SETUP REQUEST to be invalid, leading to poor quality of conservation, such as signal deterioration and call drop. This problem brings much inconvenience to users.

"Universal Mobile Telecommunication System (UMTS); UTRAN functions, examples on signaling procedures (3GPP TR25.931 version 7.1.0 Release 7) discloses a method for soft-handoff in a communication system, including: sending to a Node B Radio Link, RL, Setup Request Information (see page 49, line 10 to page 50, line 2; "1. Radio Link Setup Request" and "2. Radio Link Setup Request" in Figure 24) and establishing a Radio Link, RL, between the Node B and a User Equipment, UE in response to the RL setup request information (see page 50, lines3-9; "3. Radio Link Setup Response" and "4. Radio Link Setup Response" in Figure 24).

"Universal Mobile Telecommunications System (UMTS); UTRAN lub interface Node B Application Part (NBAP) signaling (3GPP TS25.433 version 7.1.0 Release 7) discloses a procedure which is used for establishing the necessary resources for a new Node B Communication Context in the Node B. The procedure is initiated with a RADIO LINK SETUP REQUEST message sent from the CRNC to the Node B using the Node B Control Port. Upon reception of the RADIO LINK SETUP REQUEST message, the Node B shall reserve necessary resources and configure the new Radio Link(s) according to the parameters given in the message. The Node B shall prioritise resource allocation for the RL(s) to be established (see page 64, "8.2.17.1 General" and "8.2.17.2 Successful Operation" subordinated to "8.2.17 Radio Link Setup").

### Summary of the Invention

An embodiment of this invention provides a method and an apparatus for soft handoff in a communication system so that a DRNC or a Node B using the standard of an earlier version may process the messages sent by the SRNC and/or DRNC using the standard of a later version.

The method for soft handoff in a communication system provided in an embodiment of this invention is set out in independent claim 1.

The apparatus for soft handoff in a communication system provided in an embodiment of this invention is set out in independent claim 10.

An embodiment of this invention sets the TFS indicating the invalid direction of DCH in the RL setup request information sent to the DRNC or Node B using the standard of an earlier version to zero format, and deletes the unidirectional DCH indicator. In this way, the SRNC-Node B, DRNC or DRNC-Node B processes the RL setup request information by considering the DCH to be bidirectional. The configured TFCS processes transmitted packets as the TFCS having correctly processed the unidirectional DCH indicator does. Thus, the packets sent in this mode can be received by the UE properly, and a new RL may not interfere with the original RL. This effectively avoids deterioration of conversation quality, for example, signal deterioration and call drop, caused by inability of the DRNC or Node B using the standard of an earlier version to process the messages sent by the SRNC and/or DRNC using the standard of a later version, and brings convenience to users.

The following describes the technical solution of this invention in detail through figures and embodiments.

### Brief Description of the Drawings

Figure 1 shows a signaling flowchart for adding a macro diversity RL to an RNS in the prior art.

Figure 2 shows another signaling flowchart for adding a macro diversity RL to an RNS in the prior art.

Figure 3 shows a signaling flowchart for adding a macro diversity RL to different RNSs in the prior art.

Figure 4 shows another signaling flowchart for adding a macro diversity RL to different RNSs in the prior art.

Figure 5 shows another signaling flowchart for adding a macro diversity RL to different RNSs in the prior art.

Figure 6 shows the flowchart of the method for realizing soft handoff in a communication system in an embodiment of this invention.

Figure 7 shows the flowchart of the method for realizing soft handoff in a communication system in an embodiment of this invention.

Figure 8 shows the principle block diagram of the apparatus for realizing soft handoff in a communication system in an embodiment of this invention.

### Detailed Description of the Invention

In case a macro diversity RL is to be added to an RNS, an embodiment of this invention processes as follows: the SRNC sets the TFS indicating the invalid direction of DCH in the RL setup request information to be sent to the Node B using the standard of an earlier version to zero format, that is, OxTF SIZE, and deletes the unidirectional DCH indicator in the RL setup request information. In case a macro diversity RL is to be added to different RNSs, an embodiment of this invention processes as follows: the SRNC sets the TFS indicating invalid direction of DCH in the RL setup request information to be sent to the DRNC using the standard of an earlier version to zero format, and deletes the unidirectional DCH indicator in the RL setup request information. If the DRNC and the SRNC use the standard of a later version whereas the Node B pertaining to the DRNC uses the standard of an earlier version, the DRNC sets the TFS indicating the invalid direction of DCH in the RL setup request information to zero format, deletes the unidirectional DCH indicator in the request, and then sends it to the Node B using the standard of an earlier version upon receiving an RL setup request information from the SRNC.

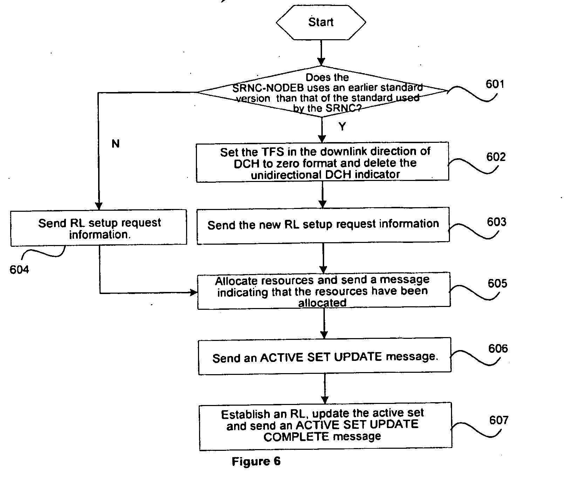

In case a macro diversity RL is to be added to an RNS, the mapping between SRNC-Node Bs and versions of the standard is established in advance and the relationship information in the mapping is saved in the SRNC. Figure 6 shows the flowchart for adding an RL to an RNS in an embodiment of this invention. In the figure, the SRNC follows R5 or later versions, and the SRNC-Node B follows R99 or R4. The embodiment includes the following steps:

Step 601: The SRNC sends RL setup request information over the NBAP protocol to the SRNC-Node B, querying the mapping for relationship information between SRNC-Node Bs and versions of the standard established in the RNS in advance. The SRNC judges whether the standard version the SRNC-Node B used is earlier than the standard version used by the SRNC. If yes, step 602 is executed; otherwise, step 604 is executed.

Step 602: The SRNC sets the TFS indicating the downlink direction of DCH in the RL setup request information to zero format and deletes the unidirectional DCH indicating parameter in the DCH IE, which is the unidirectional DCH indicator described in Table 2, and new RL setup request information is obtained.

After the SRNC sets the TFS indicating the invalid direction of DCH in the RL setup request information to be sent to the Node B following earlier standard versions to zero format and deletes the unidirectional DCH indicator, the Node B may correctly process the RL setup request information. That is, the TFCS with this configuration may process transmitted packets as the TFCS having correctly processed the unidirectional DCH indicator does. So, the packets sent in this mode can be received by the UE correctly. As a result, soft handoff is implemented successfully.

Step 603: The SRNC sends the new RL SETUP REQUEST to the SRNC-Node B and also the new RL setup request information to the SRNC-Node B. Step 605 is executed then.

Step 604: The SRNC directly sends the RL setup request information to the SRNC-Node B.

Step 605: The SRNC-Node B allocates corresponding resources for establishing an RL, sends an RL SETUP RESPONSE over the NBAP protocol to the SRNC, notifying the SRNC that resources have been allocated for establishing the RL, and establishes the transport bearer over the lub interface with the SRNC.

Step 606: After the RL is established on the lub interface, the SRNC sends an ACTIVE SET UPDATE message over the RCC protocol to the UE on the dedicated control channel (DCCH). The message contains the RL setup request information.

Step 607: After establishing the RL and updating the active set, the UE sends an ACTIVE SET UPDATE COMPLETE message to the SRNC notifying the updating of the ACTIVE SET is achieved.

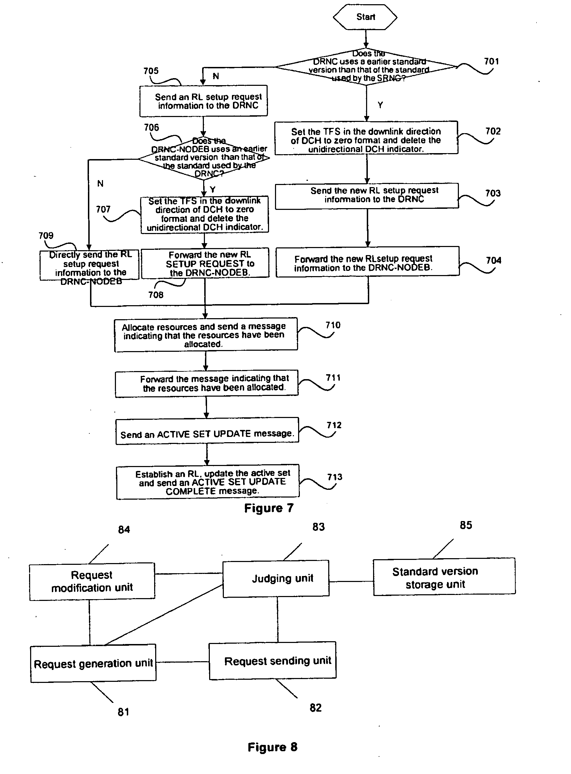

In case a macro diversity RL is to be added to different RNSs, the mapping between DRNCs pertaining to the SRNC and versions of the standard is established in advance and the relationship information in the mapping is saved in the SRNC. In addition, the mapping between DRNC-Node Bs pertaining to the DRNC and versions of the standard is established in advance and the relationship information in the mapping is saved in the DRNC. Figure 7 shows the flowchart for adding a macro diversity RL to different RNSs in an embodiment of this invention. In the figure, the SRNC uses R5 or later versions and the DRNC uses R99 or R4; or the SRNC and DRNC use R5 or later versions and the DRNC-Node B uses R99 or R4. The embodiment includes the following steps:

Step 701: the SRNC sends RL setup request information over the RNSAP protocol to the DRNC, querying the pre-established mapping for relationship information. The SRNC judges whether the version of the standard the DRNC follows is earlier than the version the SRNC itself follows. If yes, step 702 is executed; otherwise, step 705 is executed.

Step 702: The SRNC sets the TFS indicating the downlink direction of DCH in the RL setup request information to zero format and deletes the unidirectional DCH indicating parameter in the DCH IE, which is just like the unidirectional DCH indicator described in Table 2, and new RL setup request information is obtained.

Step 703: The SRNC sends the new RL SETUP REQUEST to the DRNC and also the new RL setup request information.

Step 704: The DRNC sends the new RL setup request information to the DRNC-Node B pertaining to the DRNC. Step 709 is executed.

Step 705: The SRNC directly sends an RL SETUP REQUEST to the DRNC and also the new RL setup request information.

Step 706: The DRNC queries the pre-established mapping for the relationship information and judges whether the standard version the DRNC-Node B pertaining to the DRNC used is earlier than the version the DRNC used. If yes, Step 707 is executed; otherwise, Step 710 is executed.

Step 707: The DRNC sets the TFS indicating the downlink direction of DCH to zero format and deletes the unidirectional DCH indicator to obtain new RL setup request information.

Step 708: The DRNC sends the new RL SETUP REQUEST to the SRNC-Node B and also the new RL setup request information. Then, step 710 is executed.

Step 709: The DRNC directly sends an RL setup request information to the SRNC-Node B.

Step 710: The DRNC-Node B allocates corresponding resources for establishing an RL, sends an RL SETUP RESPONSE over the NBAP protocol to the DRNC, notifying the DRNC that resources have been allocated for establishing the RL, and establishes the transport bearer over the lub interface with the DRNC.

Step 711: The DRNC sends an RL SETUP RESPONSE over the RNSAP protocol to the SRNC and establishes the transport bearer over the lur interface with the SRNC.

Step 712: After the RL is established on the lur interface, the SRNC sends an ACTIVE SET UPDATE message over the RRC protocol to the UE on the DCCH. The message contains the RL setup request information.

Step 713: After establishing the RL and updating the active set, the UE sends an ACTIVE SET UPDATE COMPLETE message to the SRNC notifying the updating of the ACTIVE SET is achieved.

Ordinary technical personnel in this field may understand that all or part of the steps in the preceding embodiments can be implemented through a program which instructs related hardware. The program may be stored in a readable storage medium, for example, ROM/RAM, disk and CD in a computer.

An embodiment of this invention sets the TFS indicating the invalid direction of DCH in RL setup request information sent to the DRNC or Node B using the standard of an earlier version to zero format, and deletes the unidirectional DCH indicator. In this case, the DRNC or Node B may correctly process the RL setup request information sent by the SRNC and/or DRNC. As specified by the 3GPP standard, the TFCS in this configuration may process transmitted packets as the TFCS having correctly processed the unidirectional DCH indicator does. So, the packets sent in this mode can be received by the UE correctly. As a result, soft handoff is implemented successfully. In addition, the new RL does not interfere with the original RL, which effectively avoids deterioration of conversation quality, for example, signal deterioration and call drop, caused by inability of the DRNC or Node B using the standard of an earlier version to process the messages sent by the SRNC and/or DRNC using the standard of a later version and brings convenience to users.

In WCDMA 3GPP standard versions later than R6, HSUPA is introduced, which further extends the content of the unidirectional DCH indicator. If the SRNC uses a standard version later than R6, and Node B, DRNC or DRNC-Node B does not support the unidirectional IE, that is, the Node B, DRNC or DRNC-Node B uses a standard version earlier than R5, the problem and the solution are similar to the processing of the HSDPA service in the preceding embodiments.

An embodiment of this invention provides an apparatus for realizing soft handoff in a communication system. As shown in Figure 8, the apparatus includes request generation unit 81, request sending unit 82, judging unit 83, request modification unit 84, and standard version storage unit 85. Request generation unit 81 is adapted to generate RL setup request information, and request sending unit 82 is adapted to send the RL setup request information to a Node B. Protocol version storage unit 85 is adapted to store the mapping of relationship information between the equipment that receives the RL setup request information and the version of the standard used by the equipment.

When request sending unit 82 needs to send RL setup request information to other equipment, judging unit 83 judges whether the standard version the equipment that receives the RL setup request information used is earlier than the standard version used by the equipment that sends the information according to the relationship information stored in standard version storage unit 85.

If yes, judging unit 83 notifies request modification unit 84, which then sets the TFS indicating the invalid direction of DCH in the RL setup request information to zero format and deletes the unidirectional DCH indicator in the setup request information; that is, new RL setup request information whose TFS is set to zero format is generated. Request generation unit 81 delivers the new RL setup request information to request sending unit 82, which then sends the RL setup request information.

If no, judging unit 83 notifies request generation unit 81 of directly delivering the RL setup request information not modified to request sending unit 82, which then sends the information.

In the preceding embodiments, judging unit 83 may judge whether the version of standard the equipment that receives the RL setup request information used is earlier than the version of the standard used by the equipment that sends the information according to the relationship information stored in standard version storage unit 85. This invention is not limited to this embodiment. It may be implemented in other modes, for example, acquiring the version of the standard used by the equipment that receives the RL setup request information by exchange of messages with the equipment.

The apparatus provided in the embodiment of this invention may be integrated into the DRNC or SRNC in the communication system so that the DRNC or Node B using the standard of an earlier version can process the messages sent by the SRNC and/or DRNC using the protocol of a later version. For details of the soft handoff process, refer to the preceding description of embodiments of this invention.

It should be noted that the preceding embodiments are used only to describe the technical solution of this invention instead of limiting this invention. Although detailed description is made for the preferred embodiments of this invention, it is to be understood that those skilled in the field can make various modification to this invention without departing from the scope of this invention, as set forth in the appended claims.

## Claims

1. A method for soft handoff in a communication system **characterized by** :
setting (602, 707) a Transport Format Set, TFS, indicating a downlink direction of a dedicated channel, DCH, to zero format and deleting an unidirectional DCH indicator in radio link, RL, setup request information to obtain a new RL setup request information if a version of a standard that a first equipment which is to receive the RL setup request information follows is earlier than a version of a standard that a second equipment which is to send the RL setup request information follows; and
sending (603, 708) to the first equipment the new RL setup request information in which the TFS is set to zero format.

2. The method of claim 1, wherein the first equipment is a Node B, and the second equipment is a serving radio network controller, SRNC; and wherein a process of determining whether the version of standard that the first equipment which is to receive the RL setup request information follows is earlier than the version of the standard that the second equipment which is to send the RL setup request information follows comprises:
determining (601) by the SRNC, when sending the RL setup request information to the Node B, whether the version of standard that the Node B which is to receive the RL setup request information follows is earlier than the version of the standard that the SRNC which is to send the RL setup request information follows according to relationship information in a pre-established mapping between the Node B and the version of the standard followed by the Node B.

3. The method of claim 1 or 2, wherein the method further comprises:
establishing (605-607) an RL between the Node B and a user equipment, UE, and updating an active set.

4. The method of claim 3, wherein the process of establishing the RL between the Node B and the UE and updating the active set comprises:
establishing (605), by the Node B, the RL and returning an RL SETUP COMPLETE message to the SRNC;
sending (606), by the SRNC, an ACTIVE SET UPDATE message containing the RL setup request information to the UE;
establishing (607), by the UE, the RL and returning an ACTIVE SET UPDATE COMPLETE message to the SRNC.

5. The method of claim 1, wherein the first equipment is a Node B, and the second equipment is a drift radio network controller, DRNC; and wherein a process of determining whether the version of standard that the first equipment which is to receive the RL setup request information follows is earlier than the version of the standard that the second equipment which is to send the RL setup request information follows comprises:
determining (706), by the DRNC, when forwarding the RL setup request information received from an SRNC to the Node B, whether the version of standard that the Node B which is to receive the RL setup request information follows is earlier than the version of the standard that the DRNC which is to send the RL setup request information follows according to relationship information in a pre-established mapping between the Node B and the version of the standard followed by the Node B.

6. The method of claim 1, wherein the first equipment is a DRNC, and the second equipment is a SRNC; and wherein a process of determining whether the version of standard that the first equipment which is to receive the RL setup request information follows is earlier than the version of the standard that the second equipment which is to send the RL setup request information follows comprises:
judging (701) by the SRNC whether the version of standard that the DRNC follows is earlier than the version of the standard that the SRNC which is to send the RL setup request information follows.

7. The method of claim 6, wherein the method further comprises:
forwarding (704), by the DRNC, the new RL setup request information to a Node B, when receiving the new RL setup request information in which TFS is set to zero format from the SRNC.

8. The method of claim 6, wherein the method further comprises:
if the version of standard that the DRNC follows is not earlier than the version of the standard that the SRNC which is to send the RL setup request information follows, sending (705) by the SRNC the RL setup request information to the DRNC; and
forwarding (708), by the DRNC, the RL setup request information to a Node B.

9. The method of claim 5 or 7 or 8, wherein the method further comprises: establishing (710-713) an RL between the Node B and a user equipment, UE, and updating an active set; and
wherein the process of establishing the RL between the Node B and UE and updating the active set comprises:
establishing (710), by the Node B, the RL and returning an RL SETUP RESPONSE message to the DRNC;
returning (711), by the DRNC, the RL SETUP RESPONSE message to the SRNC;
sending (712), by the SRNC, an ACTIVE SET UPDATE message containing the RL setup request information to the UE;
establishing (713), by the UE, the RL and returning an ACTIVE SET UPDATE COMPLETE message to the SRNC.

10. An apparatus for realizing soft handoff in a communication system **characterized by**:
a unit, adapted to set the Transport Format Set, TFS, indicating a downlink direction of a dedicated channel, DCH, in the RL setup request information to zero format and to delete the unidirectional DCH indicator in the RL setup request information to obtain a new RL setup request information if a version of a standard that a first equipment which is to receive the RL setup request information follows is earlier than a version of a standard that a second equipment which is to send the RL setup request information follows; and
a unit, adapted to send to the first equipment the new RL setup request information in which the TFS is set to zero format.

11. The apparatus of claim 10, wherein:
the apparatus is integrated into a drift radio network controller, DRNC; and the DRNC further comprises:
a means adapted to determine whether a version of standard that a Node B which is to receive a RL setup request information follows is earlier than the version of the standard that the DRNC which is to send the RL setup request information follows according to relationship information in a pre-established mapping between the Node B and the version of the standard followed by the Node B, when forwarding the RL setup request information received from an a serving radio network controller, SRNC, to the Node B.

12. The apparatus of claim 10, wherein the apparatus is integrated into the a serving radio network controller, SRNC; and the SRNC further comprises:
a means adapted to determine whether the version of standard that a Node B which is to receive the RL setup request information follows is earlier than the version of the standard that the SRNC which is to send the RL setup request information follows according to relationship information in a pre-established mapping between the Node B and the version of the standard followed by the Node B, when sending the RL setup request information to the Node B.

13. The apparatus of claim 10, wherein the apparatus is integrated into the a serving radio network controller, SRNC; and the SRNC further comprises:
a means adapted to judge whether a version of standard that a drift radio network controller, DRNC, which is to receive the RL setup request information follows is earlier than a version of the standard that the SRNC which is to send the RL setup request information follows.

## Patentansprüche

1. Verfahren zum Soft-Handoff in einem Kommunikationssystem, **gekennzeichnet durch** die folgenden Schritte:
Setzen (602, 707) eines Transport Format Set TFS, wodurch eine Abwärtsstreckenrichtung eines dedizierten Kanals DCH angezeigt wird, auf Nullformat und Löschen eines unidirektionalen DCH-Indikators in Aufbauanforderungsinformationen der Funkstrecke RL, um neue RL-Aufbauanforderungsinformationen zu erhalten, wenn eine Version eines Standards, dem ein erstes Gerät, das die RL-Aufbauanforderungsinformationen empfangen soll, folgt, früher als eine Version eines Standards ist, dem ein zweites Gerät, das die RL-Aufbauanforderungsinformationen senden soll, folgt; und
Senden (603, 708) der neuen RL-Aufbauanforderungsinformationen, in denen das TFS auf Nullformat gesetzt ist, zu dem ersten Gerät.

2. Verfahren nach Anspruch 1, wobei das erste Gerät ein Node B ist und das zweite Gerät ein Serving Radio Network Controller SRNC ist; und wobei ein Prozess zum Bestimmen, ob die Version des Standards, dem das erste Gerät, das die RL-Aufbauanforderungsinformationen empfangen soll, folgt, früher als die Version des Standards ist, dem das zweite Gerät, das die RL-Aufbauanforderungsinformationen senden soll, folgt, Folgendes umfasst:
Bestimmen (601) durch den SRNC beim Senden der RL-Aufbauanforderungsinformationen zu dem Node B, ob die Version des Standards, dem der Node B, der die RL-Aufbauanforderungsinformationen empfangen soll, folgt, früher als die Version des Standards ist, dem der SRNC, der die RL-Aufbauanforderungsinformationen senden soll, folgt, gemäß Beziehungsinformationen in einer im Voraus hergestellten Abbildung zwischen dem Node B und der Version des Standards, dem der Node B folgt.

3. Verfahren nach Anspruch 1 oder 2, wobei das Verfahren ferner Folgendes umfasst:
Herstellen (605-607) einer RL zwischen dem Node B und einem Benutzergerät UE und Aktualisieren einer aktiven Menge.

4. Verfahren nach Anspruch 3, wobei der Prozess des Herstellens der RL zwischen dem Node B und dem UE und des Aktualisierens der aktiven Menge Folgendes umfasst:
Herstellen (605) der RL durch den Node B und Zurückgeben einer Nachricht RL SETUP COMPLETE zu dem SRNC;
Senden (606) einer Nachricht ACTIVE SET UPDATE durch den SRNC, die die RL-Aufbauanforderungsinformationen enthält, zu dem UE;
Herstellen (607) der RL durch das UE und Zurückgeben einer Nachricht ACTIVE SET UPDATE COMPLETE zu dem SRNC.

5. Verfahren nach Anspruch 1, wobei das erste Gerät ein Node B ist und das zweite Gerät ein Drift Radio Network Controller DRNC ist; und wobei ein Prozess des Bestimmens, ob die Version des Standards, dem das erste Gerät, das die RL-Aufbauanforderungsinformationen empfangen soll, folgt, früher als die Version des Standards ist, dem das zweite Gerät, das die RL-Aufbauanforderungsinformationen senden soll, folgt, Folgendes umfasst:
Bestimmen (706) durch den DRNC beim Weiterleiten der von einem SRNC empfangenen RL-Aufbauanforderungsinformationen zu dem Node B, ob die Version des Standards, dem der Node B, der die RL-Aufbauanforderungsinformationen empfangen soll, folgt, früher als die Version des Standards ist, dem der DRNC, der die RL-Aufbauanforderungsinformationen senden soll, folgt, gemäß Beziehungsinformationen in einer im Voraus hergestellten Abbildung zwischen dem Node B und der Version des Standards, dem der Node B folgt.

6. Verfahren nach Anspruch 1, wobei das erste Gerät ein DRNC ist und das zweite Gerät ein SRNC ist; und wobei ein Prozess des Bestimmens, ob die Version des Standards, dem das erste Gerät, das die RL-Aufbauanforderungsinformationen empfangen soll, folgt, früher als die Version des Standards ist, dem das zweite Gerät, das die RL-Aufbauanforderungsinformationen senden soll, folgt, Folgendes umfasst: Beurteilen (701) durch den SRNC, ob die Version des Standards, dem der DRNC folgt, früher als die Version des Standards ist, dem der SRNC, der die RL-Aufbauanforderungsinformationen senden soll, folgt.

7. Verfahren nach Anspruch 6, wobei das Verfahren ferner Folgendes umfasst:
Weiterleiten (704) der neuen RL-Aufbauanforderungsinformationen durch den DRNC zu einem Node B beim Empfangen der neuen RL-Aufbauanforderungsinformationen, in denen TFS auf Nullformat gesetzt ist, von dem SRNC.

8. Verfahren nach Anspruch 6, wobei das Verfahren ferner Folgendes umfasst:
wenn die Version des Standards, dem der DRNC folgt, nicht früher als die Version des Standards ist, dem der SRNC, der die RL-Aufbauanforderungsinformationen senden soll, folgt, Senden (705) der RL-Aufbauanforderungsinformationen durch den SRNC zu dem DRNC; und
Weiterleiten (708) der RL-Aufbauanforderungsinformationen durch den DRNC zu einem Node B.

9. Verfahren nach Anspruch 5 oder 7 oder 8, wobei das Verfahren ferner Folgendes umfasst: Herstellen (710-713) einer RL zwischen dem Node B und einem Benutzergerät UE und Aktualisieren einer aktiven Menge; und
wobei der Prozess des Herstellens der RL zwischen dem Node B und dem UE und des Aktualisierens der aktiven Menge Folgendes umfasst:
Herstellen (710) der RL durch den Node B und Zurückgeben einer Nachricht RL SETUP RESPONSE zu dem DRNC;
Zurückgeben (711) der Nachricht RL SETUP RESPONSE durch den DRNC zu dem SRNC;
Senden (712) einer Nachricht ACTIVE SET UPDATE durch den SRNC, die die RL-Aufbauanforderungsinformationen enthält, zu dem UE;
Herstellen (713) der RL durch das UE und Zurückgeben einer Nachricht ACTIVE SET UPDATE COMPLETE zu dem SRNC.

10. Vorrichtung zum Realisieren von Soft-Handoff in einem Kommunikationssystem, **gekennzeichnet durch**:
eine Einheit, die dafür ausgelegt ist, das Transport Format Set TFS, wodurch eine Abwärtsstreckenrichtung eines dedizierten Kanals DCH angegeben wird, in den RL-Aufbauanforderungsinformationen auf Nullformat zu setzen und den unidirektionalen DCH-Indikator in den RL-Aufbauanforderungsinformationen zu löschen, um neue RL-Aufbauanforderungsinformationen zu erhalten, wenn eine Version eines Standards, dem ein ersten Gerät, das die RL-Aufbauanforderungsinformationen empfangen soll, folgt, früher als eine Version eines Standards ist, dem ein zweites Gerät, das die RL-Aufbauanforderungsinformationen senden soll, folgt; und
eine Einheit, die dafür ausgelegt ist, die neuen RL-Aufbauanforderungsinformationen, in denen das TFS auf Nullformat gesetzt ist, zu dem ersten Gerät zu senden.

11. Vorrichtung nach Anspruch 10, wobei
die Vorrichtung in einem Drift Radio Network Controller DRNC integriert ist und der DRNC ferner Folgendes umfasst:
ein Mittel, das für Folgendes ausgelegt ist: Bestimmen, ob eine Version des Standards, dem ein Node B, der RL-Aufbauanforderungsinformationen empfangen soll, folgt, früher als die Version des Standards ist, dem der DRNC, der die RL-Aufbauanforderungsinformationen senden soll, folgt, gemäß Beziehungsinformationen in einer im Voraus hergestellten Abbildung zwischen dem Node B und der Version des Standards, dem der Node B folgt, beim Weiterleiten der von einem Serving Radio Network Controller SRNC empfangenen RL-Aufbauanforderungsinformationen zu dem Node B.

12. Vorrichtung nach Anspruch 10, wobei die Vorrichtung in einen Serving Radio Network Controller SRNC integriert ist und der SRNC ferner Folgendes umfasst:
ein Mittel, das für Folgendes ausgelegt ist: Bestimmen, ob die Version des Standards, dem ein Node B, der die RL-Aufbauanforderungsinformationen empfangen soll, folgt, früher als die Version des Standards ist, dem der SRNC, der die RL-Aufbauanforderungsinformationen senden soll, folgt, gemäß Beziehungsinformationen in einer im Voraus hergestellten Abbildung zwischen dem Node B und der Version des Standards, dem der Node B folgt, beim Senden der RL-Aufbauanforderungsinformationen zu dem Node B.

13. Vorrichtung nach Anspruch 10, wobei die Vorrichtung in einen Serving Radio Network Controller SRNC integriert ist und der SRNC ferner Folgendes umfasst:
ein Mittel, das für Folgendes ausgelegt ist: Beurteilen, ob eine Version des Standards, dem ein Drift Radio Network Controller DRNC, der die RL-Aufbauanforderungsinformationen empfangen soll, folgt, früher als eine Version des Standards ist, dem der SRNC, der die RL-Aufbauanforderungsinformationen senden soll, folgt.

## Revendications

1. Procédé de soft handoff dans un système de communication **caractérisé par** :
l'établissement (602, 707) d'un Ensemble de Formats de Transport, TFS, indiquant un sens aval d'un canal dédié, DCH, sur un format zéro et la suppression d'un indicateur de DCH unidirectionnel dans une information de requête d'établissement de liaison radio, RL, afin d'obtenir une nouvelle information de requête d'établissement de RL si une version d'un standard que suit un premier équipement devant recevoir l'information de requête d'établissement de RL est antérieure à une version d'un standard que suit un second équipement devant envoyer l'information de requête d'établissement de RL ; et
l'envoi (603, 708) au premier équipement de la nouvelle information de requête d'établissement de RL dans laquelle le TFS est établi sur le format zéro.

2. Procédé selon la revendication 1, dans lequel le premier équipement est un Noeud B, et le second équipement est un contrôleur de réseau radio de desserte, SRNC ; et dans lequel un processus permettant de déterminer si la version du standard que suit le premier équipement devant recevoir l'information de requête d'établissement de RL est antérieure ou non à la version du standard que suit le second équipement devant envoyer l'information de requête d'établissement de RL comprend :
le fait de déterminer (601) par le SRNC, lors de l'envoi de l'information de requête d'établissement de RL au Noeud B, si la version du standard que suit le noeud B devant recevoir l'information de requête d'établissement de RL est antérieure ou non à la version du standard que suit le SRNC devant envoyer l'information de requête d'établissement de RL en fonction d'informations de relation dans un mappage préétabli entre le Noeud B et la version du standard suivie par le Noeud B.

3. Procédé selon la revendication 1 ou 2, comprenant en outre :
l'établissement (605-607) d'une RL entre le Noeud B et un équipement d'utilisateur, UE, et l'actualisation d'un ensemble actif.

4. Procédé selon la revendication 3, dans lequel le processus d'établissement de la RL entre le Noeud B et l'UE et l'actualisation de l'ensemble actif comprend :
l'établissement (605), par le Noeud B, de la RL et le renvoi d'un message ÉTABLISSEMENT RL TERMINÉ au SRNC ;
l'envoi (606) à l'UE, par le SRNC, d'un message ACTUALISATION ENSEMBLE ACTIF contenant l'information de requête d'établissement de RL ;
l'établissement (607), par l'UE, de la RL, et le renvoi d'un message ACTUALISATION ENSEMBLE ACTIF TERMINÉE au SRNC.

5. Procédé selon la revendication 1, dans lequel le premier équipement est un Noeud B, et le second équipement est un contrôleur de réseau radio distant, DRNC ; et dans lequel un processus permettant de déterminer si la version du standard que suit le premier équipement devant recevoir l'information de requête d'établissement de RL est antérieure ou non à la version du standard que suit le second équipement devant envoyer l'information de requête d'établissement de RL comprend :
le fait de déterminer (706), par le DRNC, lors de l'acheminement de l'information de requête d'établissement de RL reçue d'un SRNC vers le Noeud B, si la version du standard que suit le Noeud B devant recevoir l'information de requête d'établissement de RL est antérieure ou non à la version du standard que suit le DRNC devant envoyer l'information de requête d'établissement de RL en fonction d'informations de relation dans un mappage préétabli entre le Noeud B et la version du standard suivie par le Noeud B.

6. Procédé selon la revendication 1, dans lequel le premier équipement est un DRNC, et le second équipement est un SRNC ; et dans lequel un processus permettant de déterminer si la version du standard que suit le premier équipement devant recevoir l'information de requête d'établissement de RL est antérieure ou non à la version du standard que suit le second équipement devant envoyer l'information de requête d'établissement de RL comprend :
le fait de juger (701) par le SRNC si la version du standard que suit le DRNC est antérieure ou non à la version du standard que suit le SRNC devant envoyer l'information de requête d'établissement de RL.

7. Procédé selon la revendication 6, comprenant en outre :
l'acheminement (704), par le DRNC, de la nouvelle information de requête d'établissement de RL vers un Noeud B, lors de la réception de la nouvelle information de requête d'établissement de RL dans laquelle le TFS est établi sur un format zéro depuis le SRNC.

8. Procédé selon la revendication 6, comprenant en outre :
si la version du standard que suit le DRNC n'est pas antérieure à la version du standard que suit le SRNC devant envoyer l'information de requête d'établissement de RL, l'envoi (705) par le SRNC de l'information de requête d'établissement de RL au DRNC ; et
l'acheminement (708), par le DRNC, de l'information de requête d'établissement de RL vers un Noeud B.

9. Procédé selon la revendication 5 ou 7 ou 8, comprenant en outre : l'établissement (710-713) d'une RL entre le Noeud B et un équipement d'utilisateur, UE, et l'actualisation d'un ensemble actif ; et
dans lequel le processus d'établissement de la RL entre le Noeud B et l'UE et d'actualisation de l'ensemble actif comprend :
l'établissement (710), par le Noeud B, de la RL et le renvoi d'un message RÉPONSE D'ÉTABLISSEMENT DE RL au DRNC ;
le renvoi (711), par le DRNC, du message RÉPONSE D'ÉTABLISSEMENT DE RL au SRNC ;
l'envoi (712), par le SRNC, d'un message ACTUALISATION ENSEMBLE ACTIF contenant l'information de requête d'établissement de RL à l'UE ;
l'établissement (713), par l'UE, de la RL et le renvoi d'un message ACTUALISATION ENSEMBLE ACTIF TERMINÉE au SRNC.

10. Appareil d'exécution d'un soft handoff dans un système de communication **caractérisé par** :
une unité, adaptée pour établir l'Ensemble de Formats de Transport, TFS, indiquant un sens aval d'un canal dédié, DCH, dans l'information de requête d'établissement de RL sur un format zéro et supprimer l'indicateur de DCH unidirectionnel dans l'information de requête d'établissement de RL afin d'obtenir une nouvelle information de requête d'établissement de RL si une version d'un standard que suit un premier équipement devant recevoir l'information de requête d'établissement de RL est antérieure à une version d'un standard que suit un second équipement devant envoyer l'information de requête d'établissement de RL ; et
une unité, adaptée pour envoyer au premier équipement la nouvelle information de requête d'établissement de RL dans laquelle le TFS est établi sur le format zéro.

11. Appareil selon la revendication 10 ;
l'appareil étant intégré dans un contrôleur de réseau radio distant, DRNC ; et le DRNC comprenant en outre :
un moyen, adapté pour déterminer si une version du standard que suit un noeud B devant recevoir une information de requête d'établissement de RL est antérieure ou
non à la version du standard que suit le DRNC devant envoyer l'information de requête d'établissement de RL en fonction d'informations de relation dans un mappage préétabli entre le Noeud B et la version du standard suivie par le Noeud B,
lors de l'acheminement de l'information de requête d'établissement de RL reçue depuis un contrôleur de réseau radio de desserte, SRNC, vers le Noeud B.

12. Appareil selon la revendication 10, l'appareil étant intégré dans un contrôleur de réseau radio de desserte, SRNC ; et le SRNC comprenant en outre :
un moyen, adapté pour déterminer si la version du standard que suit un Noeud B devant recevoir l'information de requête d'établissement de RL est antérieure ou non à la version du standard que suit le SRNC devant envoyer l'information de requête d'établissement de RL en fonction d'informations de relation dans un mappage préétabli entre le Noeud B et la version du standard suivie par le Noeud B, lors de l'envoi de l'information de requête d'établissement de RL au Noeud B.

13. Appareil selon la revendication 10, l'appareil étant intégré dans un contrôleur de réseau radio de desserte, SRNC ; et le SRNC comprenant en outre :
un moyen, adapté pour juger si une version du standard que suit un contrôleur de réseau radio distant, DRNC, devant recevoir l'information de requête d'établissement de RL, est antérieure ou non à une version du standard que suit le SRNC devant envoyer l'information de requête d'établissement de RL.
